# EUROPÄISCHE PATENTSCHRIFT

(11) **EP 1 513 034 B1**
(45) Veröffentlichungstag und Bekanntmachung des Hinweises auf die Patenterteilung: **17.03.2010**
(21) Anmeldenummer: 04020441.4
(22) Anmeldetag: 27.08.2004
(51) Int. Cl.: G05B 19/042

(54) **Online aktualisierbares Bediengerät (BAE) für einen Umrichter**
Online updatable control panel for a converter
Boîtier de commande avec mise à jour en ligne pour un convertisseur

(30) Priorität: 03.09.2003 DE 10340621
(43) Veröffentlichungstag der Anmeldung: 09.03.2005
(73) Patentinhaber: Lenze Automation GmbH, 40667 Meerbusch (DE)
(72) Erfinder: Hartmann, Elmar, 31855 Aerzen (DE)
(74) Vertreter: Leonhard, Frank Reimund

(56) Entgegenhaltungen:
- EP-A- 1 045 302
- EP-A- 1 139 636
- DE-A1- 10 055 026
- DE-A1- 10 061 579
- DE-A1- 10 129 567
- GB-A- 2 354 909
- US-A1- 2002 151 993

## Beschreibung

Die Erfindung befasst sich mit einem Verfahren zum Einsatz einer Bedieneinheit (BAE) für einen Umrichter.

Ein Umrichter besteht in der Regel aus einem Leistungsteil und einem Steuerteil. Der Umrichter steuert dabei Maschinen als Motoren oder Generatoren an, welche mit Drehstrom zu versorgen sind. Auch solche "Umrichter" sind hierbei angesprochen, die keinen mehrphasigen Ausgang, sondern einen gesteuerten Gleichspannungs-Ausgang für die Ansteuerung von Gleichstrom-Maschinen beinhalten. Umrichter ist insoweit allgemein zu verstehen, als ein Gerät der Leistungselektronik, welches in der Lage ist, über ein Steuerteil einen Leistungsteil zu beeinflussen, der einen Antrieb ansteuert. Eingangsgröße für den Umrichter ist dabei eine Leistungsversorgung, meist eine mehrphasige Spannungsversorgung, welche durch den Umrichter in ihrer Frequenz oder Spannung verändert wird, was zumeist über einen Zwischenkreis geschieht, so dass auf der Ausgangsseite vom Steuerteil beeinflusst Stellgrößen abgegeben werden können, für die Bewegung des als Motor zu bezeichnenden Antriebs oder - im Fall einer Bremse - des als Generator zu bezeichnenden Antriebs. Für den generatorischen Betrieb oder für den motorischen Betrieb wird dieselbe Maschine eingesetzt, lediglich in ihrem Betriebszustand unterschiedlich eingestellt.

Ausgangspunkt der Erfindung sind Vorschläge des Standes der Technik, in denen Mobiltelefone dafür verwendet wurden, ein Gerät zu steuern. Dazu finden sich Anregungen in der DE 100 61 579 A1 (Siemens), welche Kommunikationen zwischen einem Antriebssystem und einem Bediengerät offenbart. Das Bediengerät ist als Kommunikationsgerät ausgestaltet als Organizer, Handy oder Notebook, gesteuert über eine Funkstrecke oder eine Infrarotstrecke zur Ansteuerung des Antriebssystems. Alternativ offenbart die DE 101 29 567 A1 (Siemens) ein als Handy ausgestaltetes Bediengerät zur Abarbeitung eines Workflows. Je nach Position innerhalb einer Anlage mit einer räumlich großen Ausdehnung von unterschiedlichen Servern wird ein spezifischer Workflow abgearbeitet. Der Workflow wird dabei abhängig vom Server geladen, und zwar in das Handy-Bediengerät, so dass automatisch der zutreffende Workflow für die nächstgelegene Automatisierungskomponente verfügbar ist. Zusätzlich lassen sich Zugriffsberechtigungen oder Positionsbestimmungen durchführen. Aufgrund der unterschiedlichen Positionen innerhalb der großen ausgedehnten Anlage kann oder wird einem Bediener des Mobilfunkgeräts die nächstliegende AutomatisierungsKomponente angezeigt. Dazu findet die Positionsbestimmung statt. Die Nutzung der räumlichen Gegebenheiten wird als wesentlicher und zentraler Punkt in dieser Schrift beschrieben, vgl. dort besonders Absatz [08] am Ende und die Absätze [021] bis [023].

Eine dritte Alternative bietet die DE 100 55 026 A1 (Trützschler), welche sich mit einer Spinnerei-Vorbereitungsanlage befasst. Diese besitzt eine zentrale Bedieneinheit, welche lokal oder mobil betrieben werden soll, wozu die Bedien/Anzeigeeinheit sowohl in der zentralen Einheit, wie auch über eine mobile Schnittstelle ansteuerbar ist. Dabei ist aber immer eine zentrale Einheit erforderlich, unabhängig davon, ob lokal oder mobil bedient bzw. angezeigt werden soll.

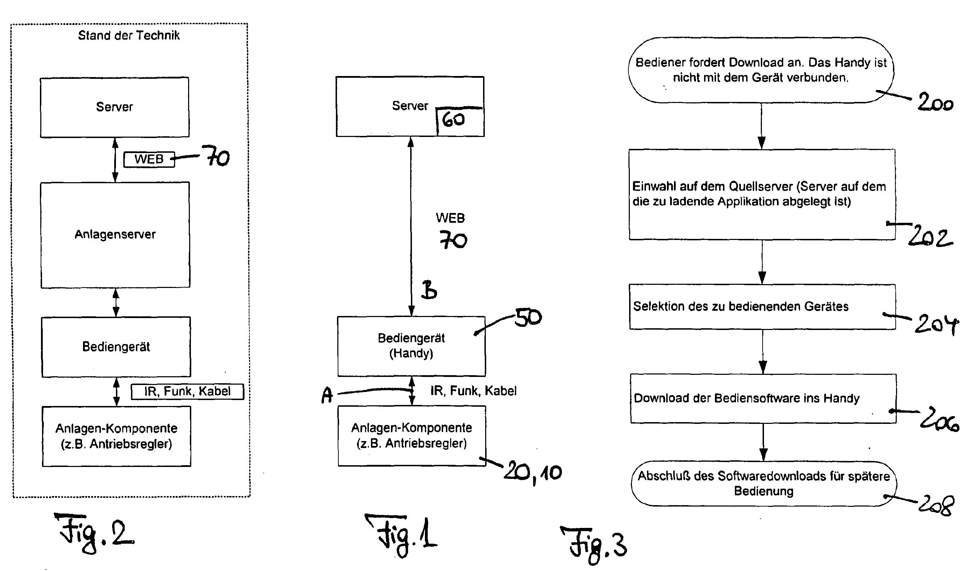

Aus der EP 1 045 302 A1 (Neles) ist eine drahtlose Steuerung eines Feldgeräts in einem industriellen Prozess bekannt. Auch hier wird das Mobilfunkgerät, dort MT genannt, als ein Bediengerät genutzt und mit ihm können mehrere Feldgeräte bedient werden. Diese Feldgeräte sind an ein System für eine Diagnose angeschlossen. Mit diesem Diagnosesystem kommuniziert das Mobilfunk-Bediengerät. Wie an allen dortigen Figuren zu ersehen ist, insbesondere den Figuren 2, 3 und 6 sowie Absatz [019], hat das Mobilteil MT keine unmittelbare steuernde Verbindung auf einen der Feldgeräte, sondern verbindet sich über einen Web-Server und einen Access Server mit diesen Geräten. Auch aus den wesentlichen Absätzen [025] am Ende, sowie Absatz [026] am Ende und Absatz [028] geht hervor, dass sich das Mobilteil (Mobilgerät MT) erst durch eine Hierarchie von Strukturen, dort Plant, Plant Areas und Tags hindurch navigieren muss, bevor ein Feldgerät gefunden ist, zu dem Wartungsarbeiten durchgeführt werden sollen oder Betriebsdaten zum Mobilteil übertragen werden sollen. Die dazu verwendete Serverstruktur, insbesondere die Zugangsserver-Struktur (dort 25, 35 und Anspruch 4) sowie eine diese Struktur mit dem Diagnosesystem koppelnder www-Server (dort 23, 33) machen es unmöglich, dass die Mobilfunkgeräte direkt mit den Feldgeräten in Verbindung stehen und über eine zugehörige Schnittstelle auf einem jeweiligen Steuerteil eines jeweiligen Feldgeräts dieses Feldgerät bedienen können, obwohl es der dortige Anspruch 1, vgl. Spalte 11, Zeilen 55 bis Spalte 12, Zeile 2, offen lässt, wie das Mobilgerät MT mit einem jeweiligen Feldgerät, dort 14, 15 und 16, in Kommunikationsverbindung steht.

Die EP 1 139 636 A2 (Schneider Automation) ist ähnlich ausgebildet, wie die vorgenannte Schrift EP '302. Das dortige System verwendet zwar auch ein Mobilteil, dort 40, 41, arbeitet indes mit einer Serverstruktur und über das globale Netz 25, über das die Steuerung der einzelnen Systemkomponenten angesprochen wird, vgl. dort insbesondere [015] und [017].

Die US 2002/0151993 A1 (Olesen et al.) befasst sich mit der Programmierung einer Motorsteuerung, bei welcher Programmierung die Konfigurationsdaten aus einem Server in den Antriebsregler geladen werden. Erkannt ist dort das Problem, dass die Programmsoftware nach und nach ihre Aktualisierung verliert, vgl. dort [005] und [010] bis [014]. Statt eines Downloads aus dem Internet in das Steuergerät wird eine interaktive Erzeugung einer Konfigurationsdatei vorgeschlagen, die an einem Internet-Server entsteht, mit Unterstützung des Motorenherstellers. Diese generierte Konfigurationsdatei wird in die Motorsteuerung geladen (downgeloaded). Nachdem der Internet-Server beim Hersteller der Motoren steht, kann der Anwender seine Konfigurationsdatei mit allen aktuellen Programmen erstellen, die auf dem Internet-Server offen oder zugänglich sind, dies durch Zugriff allein eines Web-Browsers von seinem Standort aus. Der erzeugte Konfigurationsfile wird nach Fertigstellung vom Server des Motorenherstellers in die Motorsteuerung beim Anwender übertragen, vgl. dort Absätze [018] und [019]. Ein Mobilteil oder ein Mobilfunkgerät zur Steuerung dieser Anlage ist weder beschrieben, noch dort sinnvoll einsetzbar.

Die Erfindung hat es sich **zur Aufgabe gestellt,** die Bedienung oder Anzeige von einem Umrichter schneller und einfacher zu gestalten, dabei Aktualisierungen berücksichtigen zu können, ohne dass eine Abhängigkeit von der Geräteeinrichtung (dem Umrichter) besteht, die bedient werden soll.

Gelöst wird diese Aufgabe mit einem Verfahren nach Anspruch 1, hier durch Bezugnahme inhaltlich eingebunden.

Mit der "Mobilschnittstelle" kann der Umrichter als Geräteeinrichtung betrieben werden (Anspruch 1), insbesondere initialisiert werden, was eine Voreinstellung der Steuer- oder Regelparameter oder sonstiger Parameter für die Erkennung von Betriebszuständen beinhaltet, mit denen der Umrichter seinen elektrischen Antrieb steuert oder regelt. Dazuhin kann das Mobiltelefon auch mit seinem Display als Anzeigeeinheit dienen, um Daten oder Messgrößen aus dem Umrichter anzuzeigen und zur Kontrolle einem Bediener (Benutzer) auf dem Display darzustellen. Dies führt über die reine Initialisierung des Umrichters hinaus hin zu einer Bedienung oder zumindest zu einer Beobachtung von Eigenschaften einer Regelstrecke, welche sich unter Zugrundelegung der Einstellung des Umrichters und des zugehörigen Antriebs ergibt.

Das Laden einer Applikationssoftware (Programm oder "Anwendung") aus dem Internet erfolgt ohne jede Abhängigkeit von der zu steuernden, zu initialisierenden (Anspruch 6) oder im Sinne einer Schnittstelle zum Datenaustausch betriebenen Geräteeinrichtung. Sie kann ihrerseits über eine weitere Schnittstellte mit dem Internet (einem globalen Netz) verbunden sein, muss es aber nicht, weil die Bedieneinrichtung selbst in der Lage ist, diese Verbindung aus eigener Kraft herzustellen und daraus vorab eine geeignete Applikationssoftware herunterzuladen, die in der mobilen Bedieneinheit eigenständig lauffähig ist (Anspruch 7).

Das Verfahren schafft einen schnellen und einfachen Gerätezugang. Die als Mobiltelefon arbeitende Bedieneinheit und Anzeigeeinheit (BAE) arbeitet so, dass dieses Mobiltelefon in der Lage ist, sich das Anwendungsprogramm über eine eigene Internet-Schnittstelle in aktueller Form zu besorgen, zu laden und zu starten.

Es versteht sich, dass die einzustellenden Parameter initial eingestellt werden können, sollten keine solchen vordefinierten Parameter in dem Steuerteil des Umrichters als Geräteeinrichtung vorhanden sein. Ebenso können Anfangswerte (Default-Werte) gesetzt sein, welche beim Initialisieren modifiziert werden (im Sinne von angepasst).

Das Handy kann handelsüblich sein, wobei die Gerätegenerationen sich stetig weiterentwickeln und mehr allgemeine Funktionalität bereitstellen, gerichtet auf allgemein erhältliche Betriebssysteme, die in der als Mobiltelefon eingesetzten Bedieneinheit und Anzeigeeinheit Einsatz finden, z.B. Standard-Betriebssysteme oder Applikationssoftware, wie JAVA (Anspruch 9).

Das Mobiltelefon selbst hat eine Schnittstelle (Anspruch 1, Merkmal (a)), welche die Kommunikation mit der Umrichtereinrichtung ermöglicht, so eine drahtlose Übertragungsverbindung durch Infrarot oder Funk oder auch eine kabelgebundene Verbindung über eine Kabelverbindung mit elektrischen Kontakten (Anspruch 2, 3 und Anspruch 16, 15). Die im Mobiltelefon immer leistungsfähiger werdenden grafischen Displays bieten eine geeignete Möglichkeit, Daten, Parameter und auch Verläufe von Systemgrößen grafisch darzustellen, beispielsweise einen Ablauf einer Geschwindigkeit über der Zeit oder einer Lageregelung über der Zeit. Ebenso können mit dem grafischen Display Sprungantworten der eingestellten Regelstrecke beobachtet werden, um ihre Qualität von einem Benutzer bewerten zu lassen, der anschließend modifizierte Parameter einstellt, sollte die Sprungantwort oder eine Rampenantwort nicht zufrieden stellen.

Die vorteilhafte Kombination von qualitativ hochwertigem Display mit einer gerade für Fingerbedienung noch geeigneten Tastatur zur Eingabe von Zeichen, wie Ziffern oder Buchstaben, bietet dem Benutzer die Möglichkeit, das Mobiltelefon als Bediengerät und Anzeigegerät gleichermaßen zu verwenden. Die Aktualisierung der Hardware von solchen Bediengeräten führt nicht zu einem Verlust der Qualität der Schnittstellenverbindung zu dem Umrichter, oder zu einem Neugestalten der Betriebssoftware, vielmehr sind die Mobiltelefone mit der übergeordneten Betriebssoftware geeignet, die aus dem Netz heruntergeladene Anwendungssoftware als Applikation laufen zu lassen, ohne dass es einer Neuprogrammierung oder softwaremäßigen Anpassung bedarf.

Die Möglichkeit des Herunterladens von einem Server des Herstellers des Umrichters bietet dem Anwender vor Ort die Möglichkeit, mit dem jeweils aktuell verfügbaren Programm unmittelbar eine Inbetriebnahme der Geräteeinrichtung als Umrichter vorzunehmen. Die Bedienung der Umrichter des Herstellers wird vereinfacht, zuverlässiger und kann regelmäßig mit dem aktuell verfügbaren Programm eine Inbetriebnahme ermöglichen, ohne dass Firmware in den Mobiltelefonen oder in einer anderweitigen Schnittstelle, wie PC, Laptop oder in dem Umrichter selbst ausgetauscht werden muss. Es ist auch nicht erforderlich, eine IT-Schnittstelle über den Umrichter zu benutzen, um diesen zunächst zu aktualisieren, vielmehr kann die Aktualisierung im Bediengerät selbst erfolgen, welches darüber hinaus nicht nur bedient, sondern auch Daten aus dem Umrichter anzuzeigen in der Lage ist.

Die Verbindung zwischen dem Mobiltelefon und dem zu bedienenden (zu initialisierenden) Umrichter kann dann aufgebaut werden, wenn die Anwendung in dem Mobiltelefon gestartet worden ist, bzw. zuvor in der aktuellen Version aus einer Site (einem Server) des Herstellers heruntergeladen wurde (Anspruch 8). Dazu können auf der Site des Herstellers mehrere Anwendungen für einen Umrichter verfügbar sein, insbesondere angepasst an eine Ausbaustufe des Umrichters (Anspruch 10), so dass der Benutzer der Mobiltelefon-Bedieneinheit das aktuelle, passende Anwendungsprogramm in dem Mobiltelefon starten kann, wenn er mit der Inbetriebnahme des Umrichters befasst ist. Nach einem Herunterladen kann das Programm in dem Mobiltelefon weiterhin verfügbar und lauffähig bleiben (Anspruch 11).

Eine (nochmalige) Aktualisierung erfolgt nach einer vorhergehenden Abfrage (Anspruch 12), ob Updates auf der Site des Herstellers verfügbar sind, oder die aktuell im Handy noch geladene Software die aktuellste Fassung darstellt, so dass sie weiterhin für die Bedienung oder für die Inbetriebnahme des Umrichters verwendet werden kann, die dem Typ oder der Art des Umrichters entsprechen, der zuvor mit dem geladenen Programm in Betrieb genommen wurde.

Die Schnittstelle zwischen dem Mobiltelefon und dem Umrichter kann in mehreren Varianten ausgeführt sein (Anspruch 2, 3, 16, 15). Bevorzugt ist eine Infrarot-Schnittstelle, über welche die meisten Mobiltelefone heute verfügen.

Ein handelsübliches Handy wird durch einen standardmäßigen Download einer von der Hardware des Handys unabhängigen Anwendung zu einer Bedien- und Anzeigeeinrichtung, welche mobil ist und an einem jeweiligen Anwendungsort angepasst verwendet werden kann. Eine Vielzahl von Geräteeinrichtungen kann mit dieser Mobileinheit angesteuert werden.

Die unterschiedlichsten Umrichter können mit derselben Bedieneinheit in Betrieb genommen werden, was es dem Benutzer oder dem Inbetriebnahme-Beauftragten erleichtert, mit den neuesten Gerätegenerationen von Umrichtern leichter umgehen zu können bzw. ebenso umgehen zu können, wie mit älteren Gerätegenerationen. Selbst solche Umrichter, welche dem Beauftragten zur Inbetriebnahme unbekannt sind, können mit einer geeigneten Anwendungssoftware (von der Site des Herstellers) unmittelbar bedienbar werden.

Hardwarekosten für den Abnehmer entstehen nicht, wenn der Kunde sein höchstwahrscheinlich selbst verfügbares Mobiltelefon zu einer Bedien- und Anzeigeeinrichtung (BAE) einrichten kann, welches zur Steuerung des bei ihm eingesetzten Umrichters ohne weiteres Anwendung finden kann.

Mit der Erfindung ist abhängig vom zu bedienenden Umrichter die komplette Bedienerführung, Visualisierung und Textdarstellung von einer Site (einem Server) des Herstellers herunterladbar, die nicht Bestandteil der Anlage sein muss, welche in Betrieb genommen wird. Für viele unterschiedliche Geräte kann Software heruntergeladen werden und die Bedienschnittstelle (die Bedien-Anzeigeeinrichtung) ist jederzeit anpassbar.

Die Anpassung der Schnittstelle zwischen dem Mobiltelefon und dem in Betrieb zu nehmenden Umrichter kann auch durch eine "wireless" LAN-Schnittstelle erfolgen, so dass sich das Mobiletelefon unmittelbar in den lokalen Bus hineinkoppeln lässt, welcher die Steuerung des Umrichters übernimmt.

Ausführungsbeispiele der Erfindung sollen letztere ergänzen und verdeutlichen.
- **Figur 1**: veranschaulicht eine erste Ausführungsform der Erfindung.
- **Figur 2**: veranschaulicht eine im Stand der Technik verwendete Steuerung, über eine Web-Schnittstelle, die vom Anlagenserver zum IT-Netz aufgebaut wird.
- **Figur 3**: veranschaulicht ein weiteres Ausführungsbeispiel für einen Download ohne Verbindung zum Umrichter 1.
- **Figur 4**: veranschaulicht einen Online-Download während einer Upload-Verbindung vom Umrichter 1.
- **Figur 5**: veranschaulicht einen Upload vom Umrichter 1.
- **Figur 6**: ist eine schematische Ansicht des Systems mit den zu verwendenden Schnittstellen zwischen Mobiltelefon 50 und Umrichtereinheit 1 bzw. Internet 70.
- **Figur 6a, Figur 6b, Figur 6c**: sind Details aus und zu Figur 6.

Ein erstes Ausführungsbeispiel soll mit einem Vergleich zu einem Verfahren des Standes der Technik erläutert werden, wobei die Ausgestaltung nach einem Beispiel der Erfindung in Figur 1 veranschaulicht ist, während im allgemeinen die Figur 2 eine verfügbare Variante des Standes der Technik zeigt. In Figur 2 ist über einen Netzzugang zum Internet (Web) ein Anlagenserver mit einem Host im Web gekoppelt. Diese Kopplung kann temporär oder stationär sein. Der Anlagenserver wird von einem Bediengerät angesteuert, wobei das Bediengerät selbst Anlagen-Komponenten, z.B. einen Antriebsregler über ein Kabel, Funk oder eine Infrarot-Schnittstelle ansteuert. Das Bediengerät selbst hat ein Display zur Anzeige von Parametern der Anlagenkomponente. Das Bediengerät selbst ist nicht mit dem Web verbunden, sondern benutzt den Anlagenserver mit bzw. dessen Schnittstelle zum Internet.

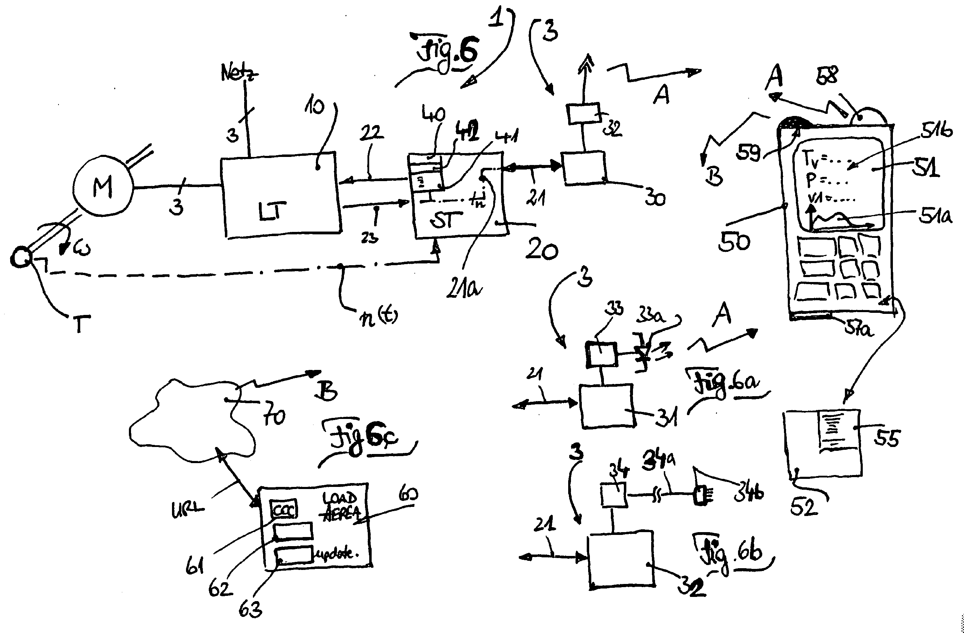

Nach Figur 1 ist derselbe Server im Netz eingestellt und über eine URL erreichbar, aber nicht von einem Anlagenserver, sondern von einem Bediengerät 50 selbst, wie es in Figur 6 schematisch dargestellt ist. Auch in Figur 6c ist das Web 70 mit der üblich gewordenen "Wolke" repräsentiert, die aber lediglich die Vielzahl von URLs repräsentiert, welche zugänglich sind, zum einem vom Betreiber des Servers, auf dem die URL einer Site 60 zur Verfügung steht, zum anderen vom Netzbetreiber des Funknetzes, mit dem das Bediengerät 50 in Verbindung steht. Damit kann eine Kette an Verbindungen bereit gestellt werden, die vom Mobiltelefon 50 über den Betreiber des Mobilfunknetzes zu dem Betreiber der URL (des Servers) verläuft, auf welchem die im folgenden beschriebenen Anwendungsprogramme für das Bediengerät 50 zur Verfügung stehen, zum Herunterladen.

Die Anlagen-Komponente ist in Figur 6 schematisch mit 20,10 repräsentiert, hier als ein Steuerteil 20 und ein Leistungsteil 10, welche einen Antrieb M steuern. Der Leistungsteil LT sorgt für eine Umsetzung des Leistungsnetzes, meist eines Dreiphasennetzes in ein entsprechend alternatives Mehrphasennetz zum Ansteuern des Antriebs, als Asynchronmaschine, Synchronmaschine oder bei nur zwei Anschlüssen als Gleichstrommaschine, welche nicht gesondert dargestellt ist. Der Antrieb M kann motorisch oder generatorisch betrieben werden, es kann demzufolge sowohl ein Motor, wie auch ein Generator sein. Im Allgemeinen ist dieser Antrieb als ein rotatorischer Aktor zu bezeichnen, der über seine mechanische Welle mit einem "Tachogenerator" T in Verbindung steht, der auch als Encoder oder sonstwie bekanntes Gerät zur Feststellung von Lage und/oder Drehzahl ausgestaltet sein kann. Sein Ausgangssignal n(t) wird von dem Steuerteil 20 erfasst und führt zu eine entsprechenden Ansteuerung 22 des Leistungsteils 10. Weitere Messgrößen aus dem Leistungsteil können über entsprechende Signalführungen oder Digitalschnittstellen 23 dem Steuerteil 20 zugeführt werden.

Die Trennung in Leistungsteil und Steuerteil ist logischer Natur, sie muss physisch nicht in getrennten Komponenten vorliegen. Diese Komponenten können auch gemeinsam in einem Anwendergerät zusammengefasst sein.

Der Steuerteil ST, auch 20 genannt, hat einen Speicherbereich, in welchem Parameter oder Daten gespeichert werden. Es sind repräsentativ Daten 41 und Parameter 40 dargestellt, welche in dem schreibbaren Speicherbereich gespeichert und modifizierbar sind. Über eine Verbindung 21 wird eine Schnittstelle 30 angesteuert, welche über eine Übertragungsanpassung 36 Signale sendet oder empfängt. Diese Übertragungsverbindung A kann mehrere physische Gestalten annehmen, wie in den

**Figuren 6a und 6b** veranschaulicht. Während in Figur 6 eine drahtlose Übertragung durch Hochfrequenz durch die Verbindungsanpassung 36 erreicht wird, ist in der Figur 6a eine optische Kopplung, bevorzugt im Infrarot-Bereich vorgesehen, wozu die zweite Verbindungsanpassung 33 eine geeignete optische Sende- und Empfangseinrichtung 33a ansteuert, um mit dem Bediengerät 50 in Kontakt zu treten. Das Bediengerät hat eine entsprechend korrespondierende optische Schnittstelle 58, um die Übertragungsverbindung A zur Verfügung stellen zu können.

In **Figur 6b** ist eine per Kabel/Leitung 34a vorgesehene Verbindung zu einer Kontaktschnittstelle 57a am Bediengerät 50 vorgesehen, wobei das Kabel 34a von der dritten Verbindungsanpassung 34 mit einem Abschlussstecker 34b versehen ist, um zu der Buchse 57a an dem Mobiltelefon 50 zu passen.

In einer nicht gesondert dargestellten, aber entsprechend verständlichen Schnittstelle ist eine drahtlose Netzwerks-Schnittstelle vorgesehen, die den internen Bus 21,21a des Steuerteils von dem Mobiltelefon 50 aus anspricht. Das Mobiltelefon 50 wird durch eine drahtlose Netzwerksverbindung (wireless LAN-Schnittstelle) in den Bus des Umrichters eingekoppelt. An diesem Bus sind weitere Komponenten des Umrichters angeschlossen. Das Mobiltelefon wird dann als Busteilnehmer betrieben, mit der ihm eigenen Funktion der Anzeige und der Einstellung von den beschriebenen Parametern.

Alle Schnittstellen 30, 31 und 32 haben die Verbindung 21, welche zum Steuerteil 20 passt. Sie kann als lokaler Bus 21 a ausgestaltet sein, zum Anschluss der Komponenten in dem Steuerteil 20, wie die Speicher 40,41,42 und die Schnittstellen 30,31 oder 32.

Die zuerst beschriebene Übertragung A über das Hochfrequenzsignal kann als Funksignal mit der Antenne 59 des Bediengerätes arbeiten, welche außerdem eine zweite Verbindung B zur Verfügung stellt, die mit dem Internet 70 kommuniziert, wozu eine entsprechende Schnittstelle in dem Mobiltelefon 50 vorgesehen ist. Diese Antenne 59 kommuniziert mit dem Anbieter des Mobilfunknetzes, der insoweit als Bestandteil des Netzes 70 angesehen wird. Ist eine solche Funk-Schnittstelle 59 vorgesehen, kann sie beide Verbindungen A und B übernehmen, so dass die optische Schnittstelle 58 für die Kopplung A nicht benötigt wird, mit Bezug auf die Funkübertragung A nach Figur 6.

Eingesetzt in die Figur 1 veranschaulicht die Figur 6 die erste Kommunikation B über die Funkschnittstelle des Mobiltelefons 50 und die zweite Kommunikation A zu dem Umrichter 1. Letztere kann auf mehrere verschiedene Übertragungstechniken eingerichtet werden.

Von der ersten Schnittstelle 30, 31 oder 32, kurz mit 3 abgekürzt, zu der Bedieneinheit 50 als Mobiltelefon führen Eingangssignale und Ausgangssignale, also im Sinne einer bidirektionalen Schnittstelle. Von dem Steuerteil 20 werden Daten oder Parameter zum Mobiltelefon über die Übertragung A übermittelt. Von dem Mobiltelefon 50 werden geänderte Parameter 40 über die Übertragung A dem Steuerteil 20 übertragen. Dies sind die Eingangssignale für den Steuerteil 20, während die zuvor übermittelten Daten 41 oder voreingestellten Parameter 40 die Ausgangssignale sind.

In dem Mobiltelefon 50 wird auf einem Display 50 das angezeigt, was der Benutzer gerade zu sehen wünscht oder einzustellen wünscht, insbesondere bei der Inbetriebnahme zu initialisieren vorgesehen hat. Dieses können die Parameter 40 sein, welche mit 51 b im Display 51 der Figur 6 veranschaulicht sind. Es können aber auch Daten 41 der Maschine sein, welche die Maschine in Antwort auf einen Testlauf oder auf eine Sprunganfrage als Sprungantwort 51a zur Verfügung stellt. Aufgrund der grafischen Eigenschaften des Displays 51 können auch Funktionsverläufe 51a als Ausgangssignale des Steuerteils 20 angezeigt werden, übertragen von der ersten Übertragungsverbindung A. Das Einstellen von Parametern über die verfügbare Tastatur ergibt sich von selbst. Unmittelbar angezeigt werden die eingestellten Parameter und dann über die Übertragung A zur Schnittstelle 3 für den Steuerteil 20 übertragen. Dort werden sie im Speicherbereich als Parameter 40 abgelegt, oder in anderer Richtung als anzuzeigende Daten 41 aus dem Speicherbereich ausgelesen und auf das Mobiltelefon 50 übertragen.

Im Mobiltelefon selbst ist schematisch ein Anwenderprogramm 55 in dessen Arbeitsspeicher 52 geladen dargestellt. Diese "geladene" Anwendung steuert eine Menueführung, Tastenabfrage und Displayansteuerung, mit welchen die beschriebenen Parameter eingestellt und übertragen werden, oder die von dem Steuerteil 20 zur Verfügung gestellten Parameter oder Daten eines Testbetriebs grafisch auf dem Display 51 veranschaulicht werden. Das lauffähige Programm 55 ist entweder im Mobiltelefon 50 installiert, oder es wird über die zweite Schnittstelle 59 und die Funkverbindung B aus dem Internet heruntergeladen. Auch dann, wenn beide Schnittstellen dieselbe Übertragungsform haben, durch Funk und mit modulierten Signalen, also die Übertragung A und die Übertragung B über die Antenne 59 des Mobiltelefons erfolgt, wird von zwei Schnittstellen gesprochen, weil sie unterschiedliche Zielrichtung haben. Durch die Internet-Kopplung B der zweiten Schnittstelle 59,70 wird das Anwendungsprogramm von einer Site 60 des Herstellers oder eines autorisierten Vertreibers des Umrichters 20, 10 (kurz mit 1 abgekürzt) heruntergeladen. Nach einem Laden wird das Programm gestartet. Es befindet sich dabei im Arbeitsspeicher 52, repräsentiert durch einen Programmabschnitt 55, zur Steuerung der Anzeige 51, bzw. der Übertragung A über die genannte zweite Schnittstelle 59,36, alternativ 58,33a, wieder alternativ 57a,34b, 34a.

Das Ändern der angezeigten Parameter 51 b erfolgt über die in Figur 6 dargestellte Tastatur.

Mit der beschriebenen Ausführung ergeben sich Verfahren als Anwendungsszenarien, die unter Zugrundelegung der beschriebenen Technik und Kommunikations-Verbindungen A und B erläutert werden sollen.

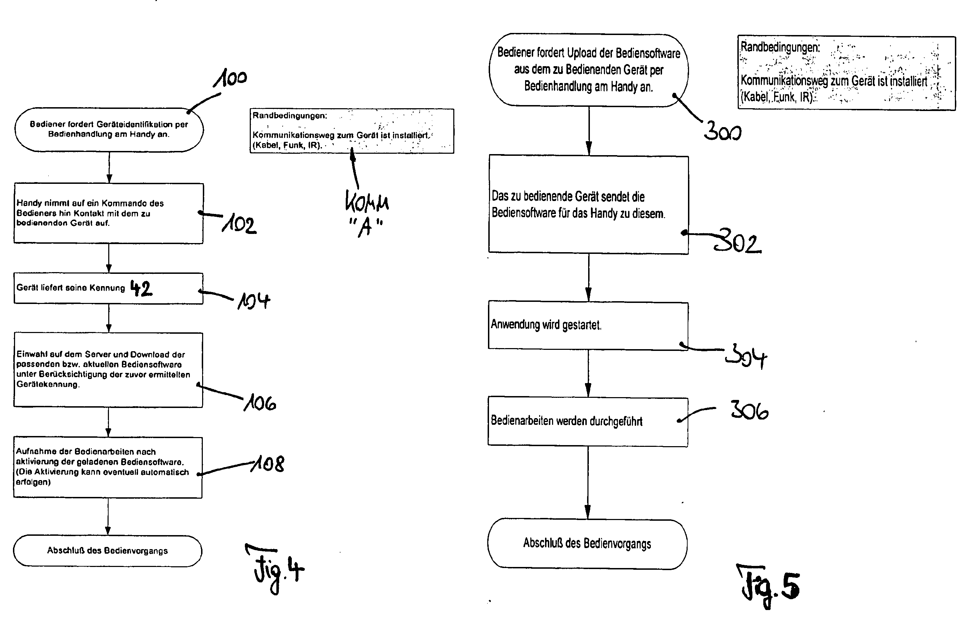

Eine Verwendung ist es, mit einem Download zu arbeiten, wie es **Figur 4** veranschaulicht. Der Bediener hat sein Bediengerät 50 so eingerichtet und eine Kommunikation A zwischen dem Mobiltelefon 50 und der Schnittstelle 58/33a (oder eine der beschriebenen alternativen Verbindungen) eingerichtet, um mit dem Steuerteil 20 kommunizieren zu können. Nach dieser Einrichtung wird auf eine Bedienhandlung des Benutzers hin ein Downloadvorgang gestartet. Dieser Downloadvorgang läuft über die zweite Schnittstelle 59/70 und die Übertragung B, wobei eine passende Bediensoftware von einer URL als Site 60 heruntergeladen wird, die im Internet eingestellt ist.

Die Verbindung zu der Site 60 ist in **Figur 6c** veranschaulicht. Die Site 60 ist im Internet 70 eingestellt und über eine URL zugänglich. Auf ihr sind symbolisch mehrere "Buttons" 61, 62, 63 dargestellt, zur Kennzeichnung von Gerätetypen oder Gerätearten, ggf. auch mit einer Angabe über den Stand des Updates. Diese Site 60 wird im Mobiltelefon 50 bei einer bestehenden Verbindung (Kommunikation) B auf dem Display 51 angezeigt. Liegt eine Auswahl eines der Buttons vor, wird das zugehörig hinter dem Button stehende Programm in das Mobiltelefon 50 heruntergeladen, zur Ablage in dessen Speicher 52, um es dort zu einer lauffähigen Anwendung 55 zu machen.

Anschließend kann die Anwendung 55 gestartet werden und die Bedientastatur steht zur Verfügung, um die zweite Kommunikation (Verbindung) A dazu zu verwenden, Steuer-, Regel- oder Einstell-Parameter 40 aus dem Steuerteil 20 in das Mobiltelefon 50 heraufzuladen (Upload), als Daten 51 b anzuzeigen, und dabei zu ändern, mit einem anschließenden erneuten Herunterladen in den Steuerteil 20 von dem Mobiltelefon 50 aus. Gleiches kann mit den Daten 41 geschehen, welche bildlich 51 a im Display 51 dargestellt werden können, aber nicht geändert vom Mobiltelefon zum Steuerteil 20 heruntergeladen werden müssen.

Ein Ablauf zur Durchführung einer Einstellung des Steuerteils 20 geht von dem oben beschriebenen Systemzustand aus, dass über die zweite Verbindung A bereits eine Kopplung hergestellt ist. Während dieser "Online"-Verbindung (Upload) mit dem Steuerteil 20 wird im Ablaufschritt 100 der Figur 4 eine Identifikation des Steuerteils 20 als Repräsentant des Umrichters 1 angefordert. Dazu kann eine im Steuerteil gespeicherte Identifikation 42 (Kennzeichnung) als Datenwort oder Typenkennzeichnung freigegeben und auf die Anforderung 102 übertragen werden. Dies geschieht auf Anforderung des Benutzers im Funktionsschritt 102, woraufhin der Umrichter 1 aus dem Steuerteil 20 die gespeicherte Identifikation 42 im Ablaufschritt 104 an das Mobiltelefon 50 über die Kommunikation A liefert. Mit dieser heraufgeladenen Identifikation kann über den zweiten Kommunikationsweg B zum Internet 70 und der Site 60 zunächst eine Einwahl stattfinden, mit einer anschließenden manuellen oder automatischen Auswahl der passenden Software, passend zur Kennzeichnung 42 des gerade abgefragten Umrichters 1. Dies geschieht im Funktionsschritt 106.

Nach einem zuvor beschriebenen Herunterladen der an der Kennung 42 orientierten Software 55 kann eine Bedienarbeit, insbesondere eine Initialisierung im Sinne einer Inbetriebnahme des identifizierten Umrichters 1 erfolgen. Dies geschieht im Funktionsschritt 108.

Dabei kann die heruntergeladene Software 55 entweder automatisch gestartet werden, oder auf Benutzerkommando hin, über die Tastatur des Mobiltelefons 50.

Eine alternative Anwendung eines Download in der beschriebenen Weise veranschaulicht die Figur 3, unter Verwendung der aufgezeigten und schon erläuterten Hardware. Hier hat ein Benutzer des Mobiltelefons 50 als BAE (Bedien-Anzeige-Einheit) sich noch nicht über die Verbindung A mit dem Steuerteil 20 in eine Kommunikationsverbindung gesetzt, sondern geht zunächst von der Kommunikationsverbindung B aus, um von der beschriebenen Site 60 über das Internet 70 eine ihm bekannte Anwendung in das Mobiltelefon 50 und dessen Speicher 52 herunterzuladen. Die heruntergeladene Anwendung 55 ist ihm dabei bekannt als zu dem Umrichter passend. Er kann durch das Herunterladen sicherstellen, dass die Anwendung die aktuelle Update-Version ist, so dass nach einem Starten dieser Anwendung und einer Herstellung des Kommunikationsweges A vor Ort die Bedienung des Steuerteils 20 von dem Mobiltelefon 50 aus erfolgen kann.

Der Arbeitsablauf stellt sich in der Figur 3 so dar. Der Benutzer fordert den Download 200 von der Site 60 an. Er ist dabei noch nicht mit einer Schnittstelle 3 über den Kommunikationsweg A verbunden. Die Einwahl auf die URL (Quell-Server) führt zu der Darstellung der Site 60 im Display 51, was im Funktionsschritt 202 dargestellt ist. Die Auswahl einer der repräsentativ verfügbaren Anwendungen erfolgt durch den Benutzer im Funktionsschritt 204. Anschließend startet der Download von der URL in den Speicher 52 des Mobiltelefons 50 im Funktionsschritt 206. Ist der Download abgeschlossen, braucht das geladene Programm 55 als Anwendungsprogramm (oder kurz "Anwendung") nicht gleich gestartet zu werden, sondern kann für einen Start verfügbar gehalten werden. In einer späteren Bedienphase wird vor oder nach einer Herstellung der Kommunikation A das Anwendungsprogramm 55 von dem Mobiltelefon 50 aus gestartet.

Eine Einstellung, insbesondere Inbetriebnahme ist dann hinsichtlich des Steuerteils und der dort befindlichen Parameter 40 möglich, ebenso wie ein Abfragen von Daten oder Prozessgrößen 41 zur Darstellung 51 b, 51 a im Display 51 des Mobiltelefons 50.

In beiden nach Figur 3 und Figur 4 beschriebenen Verfahren wird vor einem Bedienen, insbesondere einem Initialisieren des Umrichters von der Site 60 des Herstellers (oder eines autorisierten Vertriebsunternehmens) ein aktuelles Programm in den Arbeitsspeicher des Mobiltelefons 50 heruntergeladen. Die Verbindung A mit dem Steuerteil 20 wird dabei noch nicht als ein Bedienen, jedenfalls nicht als ein Initialisieren verstanden, nachdem über diese Verbindung zunächst die Identifikation 42 abgefragt wird und das Bedienen erst nach Aktualisierung des Bedienprogramms 55 oder überhaupt nach Herunterladen eines geeigneten Bedienprogramms 55 stattfindet. Beide Verfahren arbeiten auch nach dem Laden und Starten des Anwenderprogramms 55, wobei die zeitliche Spanne "nach" unterschiedlich lang ist, einmal kann das Laden weit vorgelagert sein, wenn das Verfahren nach Figur 3 eingesetzt wird, ein anderes Mal ist sie relativ zeitnah, wenn eine Verbindung A mit dem Steuerteil 20 bereits besteht und während dieser Verbindung A über die Verbindung B das Anwenderprogramm 55 geladen und gestartet wird.

Nach einem vorgenannten Starten des Anwenderprogramms kann im Rahmen einer Initialisierungsphase dieses Programms die Verbindung A aufgebaut werden, was sich als eine weitere Fortsetzung des Verfahrens gemäß Figur 3 darstellt und die "spätere Bedienung" ist, die im dortigen Block 208 den vorläufigen Abschluss des Downloads repräsentiert.

Ein weiteres Austauschen von Daten wird anhand von Figur 5 erläutert. Hier ist ein Upload von Bediensoftware aus dem zu bedienenden Gerät beschrieben, beginnend mit Funktionsschritt 300. Der Kommunikationsweg A als Verbindung zum Steuerteil 20 ist aufgebaut. Der Funktionsschritt 302 beinhaltet die Übertragung einer Bediensoftware, also eines Anwenderprogramms 55 über die Verbindung A. Nach einem Speichern der aus dem Steuerteil 20 heraufgeladenen Anwendungssoftware 55 wird diese im Speicher 52 des Mobiltelefons 50 gestartet. Bedienarbeiten können so über die Kommunikation A durchgeführt werden, wobei die Software aus dem Steuerteil 20 bzw. einem dort vorgesehenen Speicherbereich immer und jedenfalls mit der strukturellen und logischen Organisation der Firmware des Steuerteils 20 zusammenpasst. Das Starten dieser Anwendung 55 in Funktionsschritt 304 und das Durchführen der Inbetriebnahmearbeiten in Funktionsschritt 306 sind damit vorgezeichnet und funktionsfähig.

Die Anwendung 55 ist bis jetzt als ladbares und lauffähiges Anwenderprogramm beschrieben worden. Diese Anwendung kann in einer Hochsprache oder in einer Maschinensprache ausgeführt sein. Bei einer erhöhten Flexibilität empfiehlt sich eine Hochsprache, beispielsweise JAVA, die unabhängig von spezifischen Gerätetypen des Mobiltelefons 50 auf verschiedenen Herstellerprodukten gleichermaßen lauffähig ist. Während des Bestehens der Verbindung A nach Figur 5 oder im Rahmen des Download-Verfahren nach Figur 3 oder Figur 4 kann ein Unterstützungsprogramm im Mobiltelefon 50 dafür sorgen, dass die aktuelle Version des im Mobiltelefon gespeicherten Anwendungsprogramms 55 mit der Version auf der Site 60 verglichen wird, um zu signalisieren, wenn eine aktuellere Version über das Netz 70 zur Verfügung steht, als derzeit im Mobiltelefon 50 zu Bedienzwecken noch gespeichert ist.

Die vorhergehende Speicherung des Programms 55 im Mobiltelefon 50 kann dabei sowohl auf einer Voreinspeicherung beruhen, wie auf einer früher heruntergeladenen Anwendung von derselben Site 60 oder einer über Upload nach Figur 5 erhaltenen Anwendung.

## Patentansprüche

1. Verfahren zum Bedienen eines Umrichters (1) für einen elektrischen Antrieb oder Generator (M), welcher Umrichter einen Leistungsteil (10) und einen Steuerteil (20) aufweist, wobei der Steuerteil den Leistungsteil ansteuert;
(a) mit einer Schnittstelle (30,31,32;3;30,36;31,33,33a) für eine insbesondere drahtlose Übertragung (A) von Ein- und Ausgangssignalen, welche Schnittstelle dem Steuerteil (20) zugeordnet ist;
(b) mit einem Mobiltelefon (50) als eine Bedien- und Anzeigeeinheit für den Umrichter über die Schnittstelle und den Steuerteil (20;3);
(c) wobei auf einem Display (51) des Mobiltelefons Daten und/oder einzustellende Parameter (40,41) des Steuerteils (20) angezeigt werden, und sie über eine - von einem Anwendungsprogramm im Mobiltelefon (50) gesteuerten - Menueführung initial eingestellt werden oder änderbar sind,
**dadurch gekennzeichnet dass** das Mobiltelefon (50) einen Arbeitsspeicher (52) und einen Zugang zum Internet (70) besitzt, mit welchem Zugang eine Verbindung zu zumindest einer Internet-Adresse (URL) ermöglicht wird und aus dem Internet von einer Site (60) eines Herstellers des Umrichters ein Programm (55) in den Arbeitsspeicher (52) des Mobiltelefons (50) geladen wird.

2. Verfahren nach Anspruch 1, wobei die Übertragung (A) drahtlos über ein Lichtsignal erfolgt (31,33,33a), insbesondere im Infrarotbereich.

3. Verfahren nach Anspruch 1, wobei die Übertragung (A) über ein moduliertes Hochfrequenzsignal erfolgt (30,36).

4. Verfahren nach Anspruch 1, wobei das Mobiltelefon den Zugang zum Internet (70) über eine dazu geeignete weitere Schnittstelle erlangt, mit der die Verbindung zu der zumindest einen Internet-Adresse (URL) erfolgt.

5. Verfahren nach Anspruch 4, wobei aus dem Internet (70) von der Site (60) des Herstellers des Umrichters das Programm (55) in den Arbeitsspeicher (52) des Mobiltelefons (50) über die weitere Schnittstelle und nicht über das Steuerteil oder eine Internet-Kopplung des Steuerteils (20) oder des Umrichters (1) geladen wird.

6. Verfahren nach Anspruch 5, wobei das Programm ein Bedienprogramm für das Bedienen des Umrichters über den Steuerteil (20) ist, insbesondere angepasst zum Initialisieren als in Betrieb nehmen des Umrichters.

7. Verfahren nach Anspruch 5 oder 6, wobei **vor** einem Bedienen, insbesondere Initialisieren, des Umrichters (1) von der Site des Herstellers des Umrichters ein Programm in den Arbeitsspeicher (52) des Mobiltelefons heruntergeladen wird, insbesondere ein aktuelleres Programm.

8. Verfahren nach Anspruch 5 oder 7, wobei **nach** dem Laden und vor oder nach einem Starten des im Mobiltelefon (50) lauffähigen und laufenden Programms als Bedien- oder Steuerprogramm für den Umrichter eine Übertragungsverbindung zur ersten Schnittstelle (30,31,32) aufgebaut wird, mit der aus dem laufenden Programm mit dem Umrichter Daten und/oder einzustellende Parameter ausgetauscht werden.

9. Verfahren nach Anspruch 8, wobei das lauffähige Programm als Anwendung in einer übergeordneten Sprache, beispielsweise JAVA, implementiert wird.

10. Verfahren nach Anspruch 9, wobei auf der Site (60) des Herstellers auf mehrere Anwendungen als lauffähige Programme zugreifbar ist, insbesondere bezogen auf unterschiedliche Typen oder Arten eines Umrichters des Herstellers.

11. Verfahren nach Anspruch 1 oder 5, wobei das in den Arbeitsspeicher geladene Programm - nach Beenden der Herunterlade-Verbindung (B) zum Internet (70) - weiterhin offline lauffähig ist.

12. Verfahren nach Anspruch 1, 4 oder 10 oder 11, wobei bei einem Verbinden zur Site des Herstellers (60) die im Mobiltelefon bereits geladene Anwendung abfragt, ob eine aktualisierte oder aktuellere Version der in seinem Arbeitsspeicher (52) bereits geladenen, insbesondere früher heruntergeladenen Anwendung auf der Site (60) eingestellt ist.

13. Verfahren nach Anspruch 1, wobei bei Bestehen einer Übertragungsverbindung (A) zwischen dem Mobiltelefon (50) und dem Steuerteil (20) eine für den Umrichter (1) repräsentative Kennung (42) auf Anforderung (102) zu dem Mobiltelefon (50) übertragen wird (104).

14. Verfahren nach Anspruch 1 oder 13, wobei eine Anwendung als Betriebsprogramm über eine bestehende Verbindung (A) vom Umrichter zum Mobiltelefon (1,50) übertragen und im Mobiltelefon lauffähig gespeichert wird (302,304).

15. Verfahren nach Anspruch 1, wobei die Übertragung (A) über ein Schnittstellenkabel erfolgt und elektrische Signale von dem Mobiltelefon (50) zu der Schnittstelle (3) geführt werden, und in umgekehrter Richtung übertragen werden, zur Übertragung von anzuzeigenden Daten aus dem Steuerteil auf das Mobiltelefon und zur Übertragung von einzustellenden Parametern in den Steuerteil aus Eingaben am Mobiltelefon (50).

16. Verfahren nach Anspruch 1, wobei die Übertragung (A) über eine drahtlose Netzwerksverbindung erfolgt, von dem Mobiltelefon (50) in ein Bussystem (21,21à) des Steuerteils (20) des Umrichters.

## Claims

1. Process for operating a converter (1) for an electric drive or generator (M), which converter has a power part (10) and a control part (20), wherein the control part activates the power part;
(a) having an interface (30, 31, 32; 3; 30, 36; 31, 33, 33a) for in particular wireless transmission (A) of input and output signals, which interface is assigned to the control part (20);
(b) having a mobile telephone (50) as an operating and display unit for the converter via the interface and the control part (20; 3);
(c) wherein data and/or parameters (40, 41) to be adjusted of the control part (20) are displayed on a display (51) of the mobile telephone, and they are adjusted initially or can be altered via a menu mode - controlled by an application program in the mobile telephone (50), **characterised in that** the mobile telephone (50) has a working memory (52) and access to the Internet (70), with which access a connection to at least one Internet address (URL) is facilitated and a program (55) is loaded into the working memory (52) of the mobile telephone (50) from the Internet from a site (60) of a manufacturer of the converter.

2. Process according to claim 1, wherein the transmission (A) is effected (31, 33, 33a) in wireless manner via a light signal, in particular in the infrared range.

3. Process according to claim 1, wherein the transmission (A) is effected (30, 36) via a modulated high-frequency signal.

4. Process according to claim 1, wherein the mobile telephone gains access to the Internet (70) via a further interface suitable therefor, with which the connection to the at least one Internet address (URL) is effected.

5. Process according to claim 4, wherein the program (55) is loaded into the working memory (52) of the mobile telephone (50) from the Internet (70) from the site (60) of the manufacturer of the converter via the further interface and not via the control part or an Internet coupling of the control part (20) or of the converter (1).

6. Process according to claim 5, wherein the program is an operating program for the operation of the converter via the control part (20), in particular adapted for initialisation to put the converter into operation.

7. Process according to claim 5 or 6, wherein **before** operation, in particular initialisation, of the converter (1) from the site of the manufacturer of the converter, a program is downloaded into the working memory (52) of the mobile telephone, in particular a more current program.

8. Process according to claim 5 or 7, wherein **after** loading and before or after starting the program which is capable of running and is running in the mobile telephone (50) as the operating or control program for the converter, a transmission connection to the first interface (30, 31, 32) is constructed, with which data and/or parameters to be adjusted are exchanged from the running program with the converter.

9. Process according to claim 8, wherein the program which is capable of running is implemented as an application in an overriding language, for example JAVA.

10. Process according to claim 9, wherein on the site (60) of the manufacturer, several applications can be accessed as programs which are capable of running, in particular relative to different types or kinds of a converter of the manufacturer.

11. Process according to claim 1 or 5, wherein the program loaded into the working memory - after terminating the download connection (B) to the Internet (70) - can continue to be run off-line.

12. Process according to claim 1, 4 or 10 or 11, wherein during a connection to the site of the manufacturer (60), the application already loaded in the mobile telephone enquires whether an updated or more current version of the application already loaded in its working memory (52), in particular downloaded earlier, is adjusted on the site (60).

13. Process according to claim 1, wherein when a transmission connection (A) between the mobile telephone (50) and the control part (20) exists, a caption (42) which is representative of the converter (1) is transmitted (104) to the mobile telephone (50) on request (102).

14. Process according to claim 1 or 13, wherein an application as an operating program is transmitted from the converter to the mobile telephone (1, 50) via an existing connection (A) and stored (302, 304) in the mobile telephone in a manner which is capable of running.

15. Process according to claim 1, wherein the transmission (A) is effected via an interface cable and electrical signals are passed from the mobile telephone (50) to the interface (3), and are transmitted in the reverse direction, for the transmission of data to be displayed from the control part to the mobile telephone and for the transmission of parameters to be adjusted into the control part from inputs on the mobile telephone (50).

16. Process according to claim 1, wherein the transmission (A) is effected via a wireless network connection, from the mobile telephone (50) into a bus system (21, 21a) of the control part (20) of the converter.

## Revendications

1. Procédé de commande d'un convertisseur (1) pour un moteur ou un générateur électrique (M), convertisseur qui comprend une partie de puissance (10) et une partie de commande (20), dans lequel la partie de commande active la partie de puissance;
(a) avec une interface (30, 31, 32; 3; 30, 36; 31, 33, 33a) pour une transmission (A) en particulier sans fil de signaux d'entrée et de sortie, interface qui est associée à la partie de commande (20);
(b) avec un téléphone mobile (50) comme unité de commande et d'affichage pour le convertisseur au moyen de l'interface et de la partie de commande (20; 3);
(c) dans lequel on affiche sur un écran (51) du téléphone mobile des données et/ou des paramètres à régler (40, 41) de la partie de commande (20), et ils sont réglés initialement ou ils peuvent être modifiés à l'aide d'une conduite de menu commandée par un programme d'application dans le téléphone mobile (50),
**caractérisé en ce que** le téléphone mobile (50) comporte une mémoire de travail (52) et un accès à internet (70), accès avec lequel une connexion avec au moins une adresse internet (URL) est possible et on charge un programme (55) dans la mémoire de travail (52) du téléphone mobile (50) par l'intermédiaire d'internet à partir d'un site (60) d'un fabricant du convertisseur.

2. Procédé selon la revendication 1, dans lequel la transmission (A) est effectuée sans fil au moyen d'un signal lumineux (31, 33, 33a), en particulier dans le domaine infrarouge.

3. Procédé selon la revendication 1, dans lequel la transmission (A) est effectuée au moyen d'un signal à haute fréquence modulé (30, 36).

4. Procédé selon la revendication 1, dans lequel le téléphone mobile permet l'accès à l'internet (70) par l'intermédiaire d'une autre interface appropriée à cet effet, avec laquelle on effectue la connexion avec l'au moins une adresse internet (URL).

5. Procédé selon la revendication 4, **caractérisé en ce que** l'on charge le programme (55) dans la mémoire de travail (52) du téléphone mobile (50) par l'internet (70) à partir d'un site (60) du fabricant du convertisseur, par l'intermédiaire de l'autre interface et pas par l'intermédiaire de la partie de commande ou d'une connexion internet de la partie de commande (20) ou du convertisseur (1).

6. Procédé selon la revendication 5, dans lequel le programme est un programme de commande pour la commande du convertisseur par la partie de commande (20), adapté en particulier pour l'initialisation et pour la mise en service du convertisseur.

7. Procédé selon la revendication 5 ou 6, dans lequel avant une commande, en particulier une initialisation du convertisseur (1), on télécharge un programme dans la mémoire de travail (52) du téléphone mobile, à partir du site du fabricant du convertisseur, en particulier un programme plus actuel.

8. Procédé selon la revendication 5 ou 7, dans lequel, après le chargement et avant ou après un démarrage du programme pouvant tourner ou tournant dans le téléphone mobile (50) comme programme de commande ou de conduite pour le convertisseur, on établit une connexion de transmission avec la première interface (30, 31, 32) avec laquelle on échange avec le convertisseur des données et/ou des paramètres à régler provenant du programme en cours.

9. Procédé selon la revendication 8, dans lequel le programme pouvant tourner est mis en oeuvre comme application dans un langage prioritaire, par exemple JAVA.

10. Procédé selon la revendication 9, dans lequel on peut accéder sur le site (60) du fabricant à plusieurs applications comme programmes pouvant tourner, se rapportant en particulier à différents types ou modèles de convertisseurs du fabricant.

11. Procédé selon la revendication 1 ou 5, dans lequel le programme chargé dans la mémoire de travail est en outre utilisable hors ligne - après la fin de la connexion de téléchargement (B) avec l'internet (70).

12. Procédé selon la revendication 1, 4 ou 10 ou 11, dans lequel, lors d'une connexion avec le site (60) du fabricant, l'application déjà chargée dans le téléphone mobile demande si une version actualisée ou plus actuelle de l'application déjà chargée dans sa mémoire de travail (52), en particulier téléchargée antérieurement, est disponible sur le site.

13. Procédé selon la revendication 1, dans lequel, lorsqu'il existe une connexion de transmission (A) entre le téléphone mobile (50) et la partie de commande (20), on transmet sur demande au téléphone mobile (50) une identification (42) représentative du convertisseur (1).

14. Procédé selon la revendication 1 ou 13, dans lequel on transmet une application comme programme de fonctionnement par l'intermédiaire d'une connexion existante (A) du convertisseur au téléphone mobile (1, 50), et on la mémorise de manière utilisable (302, 304) dans le téléphone mobile.

15. Procédé selon la revendication 1, dans lequel la transmission (A) est effectuée au moyen d'un câble d'interface et des signaux électriques sont conduits du téléphone mobile (50) à l'interface (3), et sont transmis en sens inverse pour la transmission de données à afficher à partir de la partie de commande au téléphone mobile et pour la transmission de paramètres à régler dans la partie de commande à partir d'entrées au téléphone mobile (50).

16. Procédé selon la revendication 1, dans lequel la transmission (A) est effectuée par l'intermédiaire d'une connexion de réseau sans fil, depuis le téléphone mobile (50) dans un système de bus (21, 21a) de la partie de commande (20) du convertisseur.
